# EUROPÄISCHE PATENTANMELDUNG

(11) **EP 1 300 762 A1**
(43) Veröffentlichungstag der Anmeldung: **09.04.2003**
(21) Anmeldenummer: 01440277.0
(22) Anmeldetag: 21.08.2001
(51) Int. Cl.: G06F 9/445, G06F 12/06, G06F 11/22

(54) **Integrierte Schaltung mit externem Speicher**

(71) Anmelder: ALCATEL, 75008 Paris (FR)
(72) Erfinder: Meyer, Heiko, 71686 Remseck/Pattonville (DE); Schulz, Thomas, D-74321 Bietigheim-Bissingen (DE); Pertry, Carl Roger, D-71282 Hemmingen (DE); Saelens, Stijn, Raleigh, NC 27609 (US)
(74) Vertreter: Menzietti, Domenico, Dipl.-Ing

(57) **Zusammenfassung**

Aufgabe der Erfindung ist es, ein integrierte Schaltung zur Verfügung zu stellen, die einen Prozessor enthält und einen Boot- und/oder Testmechanismus für den Prozessor bereitstellt. Gelöst wird diese Aufgabe durch die Bereitstellung von Boot und/oder Test Software auf einem externen Speicher (MEMO) zusätzlich zur Boot bzw. Test Software auf einem internen Speicher, wodurch ein hohes Maß an Sicherheit erreicht wird und sich die Flexibilität erhöht. Fehler im Herstellungsprozess wirken sich nun nicht mehr auf die Funktionalität des Bootens und damit der gesamten integrierten Schaltung aus. Durch den externen Steuereingang wird der Bootprozess vom internen auf den externen Speicher umgeschaltet.

## Beschreibung

Die Erfindung betrifft eine integrierte Schaltung.

Integrierte Schaltungen sind z.B. als System-on-Chip auf einem ASIC ausgeführt; ASIC = Application Specific Integrated Circuit. Ein ASIC beinhaltet spezielle Schaltkreise, die an Kundenwünsche adaptiert sind. Diese erfüllen spezielle Aufgaben. In der Telekommunikafion dienen sie beispielsweise der Verarbeitung von VolP- Signalen, DSL-, ATM-, SDH-, SONET, UMTS-, GSM-, LMDS- oder ISDN-Signalen; VolP = Voice over Internet Protocol, DSL = Digital Subscriber Line, ATM = asynchronous Transfer Mode, SDH = Synchronous Digital Hierarchy, SONET = Synchronous Optical Network, UMTS = Universal Mobile Telekommunikation System, GSM = General system Mobile, LMDS = Local Multipoint Digital System, ISDN = Integrated Services Digital Network. Sie dienen somit der Verarbeitung von Sprache, Daten, Video, Internet-Webpages, etc.

Eine integrierte Schaltung hat z.B. eine spezielle Prozessorplattform zur Ausführung von generellen, aber auch applikationsspezifischen Aufgaben. Diese Prozessorplattform kann für beliebige Anwendungen genutzt werden; die selbe Prozessorplattform beispielsweise in DSL-Chips, ATM-Chips, etc. Sie beinhaltet einen Prozessor und stellt Rechenkapazität zur Verfügung. Vor jeder Verwendung muss der Prozessor gebootet werden. Die Prozessorplattform hat dazu ein internes ROM, das auf der integrierten Schaltung und in der Prozessorplattform integriert ist; ROM = Read Only Memory. Auf dem internen ROM ist die Boot Software für den Prozessor gespeichert. Das Booten erfolgt automatisch, wenn die Spannungsversorgung am Chip angelegt wird. Vom ROM kann nur gelesen werden. Die Boot Software ist nicht austauschbar. Wenn nun das interne ROM oder die Boot Software einen Fehler aufweisen sollte, so kann der Prozessor nicht gebooted werden, wodurch die gesamte integrierte Schaltung unbrauchbar wird, nicht verwendet werden kann und ausgetauscht werden muss. Gleiches gilt für Test Software.

Aufgabe der Erfindung ist es, ein integrierte Schaltung zur Verfügung zu stellen, die einen Prozessor enthält und einen alternativen Boot- und/oder Testmechanismus für den Prozessor bereitstellt.

Gelöst wird diese Aufgabe durch eine integrierte Schaltung nach Anspruch 1.

Durch die Bereitstellung von Boot Software auf einem externen Speicher wird ein hohes Maß an Sicherheit erreicht und die Flexibilität erhöht. Fehler im Herstellungsprozess wirken sich nun nicht mehr auf die Funktionalität des Bootens und damit der gesamten integrierten Schaltung aus. Der externe Speicher ist bei Nichtfunktionieren leicht und kostengünstig austauschbar. Ferner ist die Boot Software austauschbar, z.B. durch eine neues ROM mit entsprechender neuer Software oder Flash, bei dem die alte Software mit der neuen überschrieben wurde. Anstelle eines ROM oder Flash kann auch ein PROM, EPROM oder EEPROM verwendet werden; PROM = Programmable ROM, EPROM = Erasable PROM. Das Austauschen der Boot Software ist z.B. erforderlich bei einem Software-Fehler in der Boot Software oder bei einer neuer Version einer Boot Software. Der externe Speicher kann auch als RAM ausgeführt sein. Das externe RAM ersetzt z.B. ein internes, nicht funktionstüchtiges RAM.

Auf gleiche Art und Weise wird durch die Bereitstellung von Test Software auf einem externen Speicher ein hohes Maß an Sicherheit erreicht und die Flexibilität erhöht. Fehler im Herstellungsprozess wirken sich nun nicht mehr auf die Funktionalität des Testens und damit der gesamten integrierten Schaltung aus. Der externe Speicher ist bei Nichtfunktionieren leicht und kostengünstig austauschbar. Ferner ist die Test Software austauschbar, z.B. durch eine neues ROM mit entsprechender neuer Software oder Flash, bei dem die alte Software mit der neuen überschrieben wurde. Anstelle eines ROM oder Flash kann auch ein PROM, EPROM oder EEPROM verwendet werden; PROM = Programmable ROM, EPROM = Erasable PROM. Das Austauschen der Test Software ist z.B. erforderlich bei einem Software-Fehler in der Test Software oder bei einer neuer Version einer Test Software. Des weiteren ist bei einer bevorzugten Anwendung auf dem externen Speicher eine umfangreichere Software gespeichert als auf dem internen Speicher. Im Labor wird nach der Herstellung auf den externen Speicher umgeschaltet, um die integrierte Schaltung umfangreich zu testen. Im späteren Betrieb beim Kunden kann über den internen Speicher ein einfacherer Test durchgeführt werden, der beispielsweise nur noch eine Plausibilitätskontrolle durchführt und weniger Zeit in Anspruch nimmt. Auch zu Reparaturarbeiten kann dann wieder auf den externen Speicher umgeschaltet werden und ein Test mit einer umfangreicheren Software durchgeführt werden.

Bei einer vorteilhaften Ausgestaltung der Erfindung ist sowohl eine interner als auch eine externer Speicher, jeweils mit Boot und/oder Test Software, vorgesehen. Der Prozessor booted beispielsweise bevorzugt vom internen Speicher - default Einstellung - und schaltet selbständig um auf den externen Speicher nach einer Anzahl von Fehlversuchen, z.B. Drei Fehlversuche. Alternativ weist die integrierte Schaltung einen externen Steuereingang auf, über den der vom Prozessor für das Booten zu anzusprechende Speicher auswählbar ist. Entsprechendes gilt für den Testvorgang.

Vorteilhafte Ausgestaltungen sind den abhängigen Ansprüchen und der nachfolgenden Beschreibung zu entnehmen.

Im folgenden wird die Erfindung anhand eines Ausführungsbeispiels und unter Zuhilfenahme einer Figur erläutert.

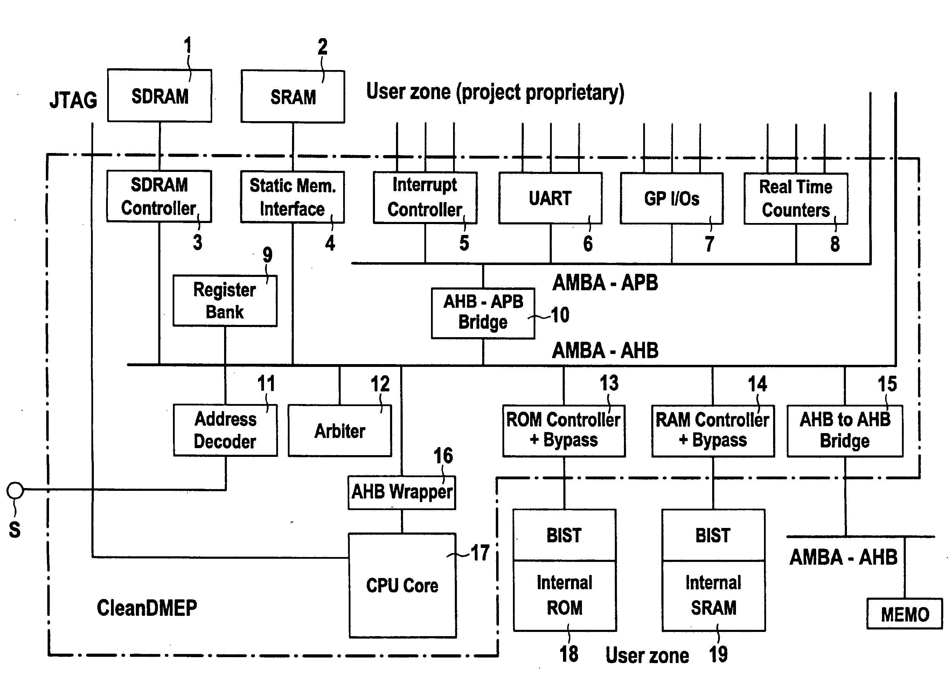

Die Figur zeigt einen schematisch dargestellten Ausschnitt aus einer erfindungsgemäßen integrierten Schaltung.

Der Ausschnitt zeigt eine Konfiguration einer mit CleanDMEP bezeichneten Prozessorplattform und mehrere mit der Prozessorplattform verbundene Module; CleanDMEP = Clean Design Methodology for Embedded Processors. Die Prozessorplattform ist eine allgemeine, konfigurierbare Plattform und kann für beliebige Verarbeitungen eingesetzt werden, z.B. in der Telekommunikation, im Maschinenbau, in der Luft- und Raumfahrt, etc; in der Telekommunikation beispielsweise bei allen Formen des XDSL, bei UMTS, VolP, etc.

Die integrierte Schaltung ist z.B. als System-on-Chip auf einem ASIC ausgeführt. Sie beinhaltet zum einen die spezielle Prozessorplattform mit einem Prozessor 17 und zum anderen einen Ausgang zum Anschließen eines externen Speichers MEMO auf dem Boot und/oder Test Software für den Prozessor 17 gespeichert ist. Der externe Speicher MEMO befindet sich nicht auf der integrierten Schaltung. Anstelle eines externen Speichers MEMO können auch zwei oder mehr verwendet werden, z.B. einer für die Boot Software und ein weiterer für die Test Software.

Vorteilhafterweise beinhaltet die integrierte Schaltung einen internen Speicher 18, auf dem ebenfalls Boot und/oder Software für den Prozessor gespeichert ist. Anstelle eines internen Speichers 18 können auch zwei oder mehr verwendet werden, z.B. einer für die Boot Software und ein weiterer für die Test Software.

Ferner weist die integrierte Schaltung vorteilhafterweise einen externen Steuereingang S auf, der dafür vorgesehen ist, zwischen externem Speicher MEMO und internem Speicher 18 umzuschalten. Anstelle eines externen Steuereingang S können auch zwei oder mehr verwendet werden, z.B. einer für die Boot Software und ein weiterer für die Test Software; insbesondere zur getrennten Ansteuerung von Boot und Test Software, wenn diese auf unterschiedlichen Speichern abgespeichert sind.

Die integrierte Schaltung beinhaltet vorteilhafterweise eine interne Adressverwaltung 11, die auch als Address Decoder bezeichnet werden kann. Der externe Steuereingang S ist dafür vorgesehen, die Adressverwaltung 11 derart zu programmieren, dass unter dem für das Booten bzw. Testen vorgesehenen Adressbereichs entweder der externe Speicher MEMO oder der interne Speicher 18 ausgewählt wird.

Die integrierte Schaltung weist somit einen externen Steuer-PIN auf, um eine direkte Verbindung zur internen Adressverwaltung der Prozessorplattform bereitzustellen. Mittels diese Steuerverbindung wird die Adressverwaltung derart programmiert oder eingestellt, dass der Prozessor Zugriff auf die Boot bzw. Test Software hat, sei es über den internen Speicher 18 oder den externen Speicher MEMO. Im einfachsten Fall wird an den Steuereingang eine logische Null angelegt, woraufhin die Adressverwaltung den internen Speicher 18 selektiert, oder eine logische Eins, woraufhin die Adressverwaltung den externen Speicher MEMO selektiert, wenn eine Adresse aus dem Boot/Test-Adressbereich angelegt wird. Im einfachsten Fall ist somit mit dem Setzen oder Nichtsetzen eines Bits bereits die Einstellung des externen Speichers MEMO bzw. des internen Speichers 18 und damit die Auswahl der Boot Software möglich. Der interne Speicher 18 ist beispielsweise als ROM ausgeführt und über einen internen schnellen Bus mit der Adressverwaltung 11 verbunden. Der schnelle Bus ist z.B. ein sogenannter AMBA-AHB. Der externe Speicher MEMO, der z.B. als Flash ausgeführt ist, ist entweder direkt über einen Controller, der mit dem internen schnellen Bus verbunden ist, mit der Adressverwaltung 11 verbunden, oder indirekt über weitere interne oder externe Bussegmente, die durch Brücken miteinander verbunden sind. Der externe Bus ist z.B. als AMBA-AHB oder als PCI-Bus ausgeführt. Die Brücke 15 ist z.B. eine AMBA-AHB zu AMBA-AHB Brücke bzw. eine AMBA-AHB zu PCl-Bus Brücke. Im einfachsten Fall kann der interne schnelle Bus auch direkt aus der integrierten Schaltung ohne Brücke rausgeführt werden. Der externe Speicher ist dann z.B. direkt an den rausgeführten schnellen Bus angeschlossen.

Im folgenden wird der allgemeine Aufbau der Prozessorplattform erläutert.

Die Prozessorplattform beinhaltet einen SDRAM Controller 3, der zum einen mit dem schnellen, internen Bus AMBA-AHB verbunden ist und zum anderen mit einem internen, aber außerhalb der Prozessorplattform angeordneten SDRAM 1. Intern bedeutet innerhalb der integrierten Schaltung, extern außerhalb der integrierten Schaltung. Der SDRAM Controller 3 steuert den Zugriff aufs SDRAM 1 und führt die erforderliche Konversion aufs Busprotokoll durch. Das SDRAM 1 kann auch außerhalb der integrierten Schaltung angeordnet werden, also extern.

Die Prozessorplattform beinhaltet ferner einen Static Memory Interface 4, das zum einen mit dem schnellen, internen Bus AMBA-AHB verbunden ist und zum anderen mit einem internen, aber außerhalb der Prozessorplattform angeordneten SRAM 2. Das Static Memory Interface 4 steuert den Zugriff aufs SRAM 2 und führt die erforderliche Konversion aufs Busprotokoll durch. Das SRAM 2 kann auch außerhalb der integrierten Schaltung angeordnet werden, also extern.

Ferner ist ein Interrupt Controller 5 vorgesehen, der zum einen mit einem langsamen, internen, z.B. als AMBA-APB ausgeführten Bus verbunden ist und zum anderen mindestens eine Schnittstelle zu einem internen oder externen, aber außerhalb der Prozessorplattform angeordneten Modul aufweist. Der Interrupt Controller 5 dient dazu, Interrupts von Modulen außerhalb der Plattform mit dem Prozessor zu verbinden.

Ferner ist ein UART 6 vorgesehen, der zum einen mit dem langsamen, internen AMBA-APB Bus verbunden ist und zum anderen eine Schnittstelle zu einem externen Host-Prozessor, der aber außerhalb der Prozessorplattform angeordnet ist, aufweist. Der UART 6 dient dazu, Daten zwischen dem externen Host Prozessor und dem internen Prozessor 17 zu übertragen.

Ferner ist ein GP I/O 7 vorgesehen, der zum einen mit dem langsamen, internen AMBA-APB Bus verbunden ist und zum anderen mindestens eine Schnittstelle zu einem internen oder externen, aber außerhalb der Prozessorplattform angeordneten Modul aufweist. Der GP I/O 7 dient dazu, Steuerinformationen zwischen Modulen außerhalb der Plattform und dem internen Prozessor 17 zu übertragen; GP I/O = General Purpose In/Out.

Ferner ist ein Real Time Counter 8 vorgesehen, der zum einen mit dem langsamen, internen AMBA-APB Bus verbunden ist und zum anderen mindestens eine Schnittstelle zu einem internen oder externen, aber außerhalb der Prozessorplattform angeordneten Modul aufweist. Der Real Time Counter 8 dient als Timer, der mit dem Systemclock läuft.

Des weiteren ist eine Register Bank 9 vorgesehen, die mit dem schnellen AMBA-AHB Bus verbunden ist. Die Register Bank 9 stellt Register für mehrere Module zur Verfügung, darunter z.B. RAM Controller 14 und SDRAM Controller 3.

Ein Arbiter 12, der mit dem schnellen AMBA-AHB Bus verbunden ist, dient dazu, bei gleichzeitigem Zugriff mehrerer Master auf den schnellen Bus, diese Zugriffe zu priorisieren und in der priorisierten Reihenfolge abzuarbeiten.

Der Prozessor 17 ist z.B. als Mikroprozessor oder als Digitaler Signalprozessor ausgeführt. Er ist eventuell über einen AHB Wrapper mit dem schnellen AMBA-AHB Bus verbunden. Der AHB Wrapper 16 führt bei Bedarf die nötige Konversion der Protokolle durch.

Ein ROM Controller 13 ist zum einen mit dem schnellen AMBA-AHB Bus verbunden und zum anderen mit dem außerhalb der Prozessorplattform angeordneten internen Speicher 18, der auch ein BIST enthalten kann; BIST = Build-In Self Test.

Der ROM Controller 13 führt die erforderliche Konversion auf Busprotokoll durch.

Der RAM Controller 14 ist zum einen mit dem schnellen, internen Bus AMBA-AHB verbunden und zum anderen mit einem internen, aber außerhalb der Prozessorplattform angeordneten SRAM 19. Der RAM Controller 14 steuert den Zugriff aufs SRAM 19 und führt die erforderliche Konversion auf Busprotokoll durch. Das SRAM 19 kann auch ein BIST enthalten.

Ferner ist eine Brücke 10 vorgesehen. Brücke 10 verbindet den schnellen AMBA-AHB Bus mit dem langsamen AMBA-APB Bus. Über die Brücke 10 wird somit eine Verbindung zwischen den am AMBA-AHB Bus angeschlossenen Modulen und den am AMBA-APB Bus angeschossenen Modulen hergestellt. So hat Prozessor 17 über Brücke 10 z.B. Zugriff auf den Interrupt Controller 5. Die Aufteilung mit zwei Bussen mit unterschiedlichen Verarbeitungsgeschwindigkeiten hat den Vorteil, dass langsame Zugriffe nicht schnelle Zugriffe behindern. Brücke 10, AMBA-APB Bus und die daran angeschlossenen Module sind optional. Werden die Funktionalitäten der Module nicht benötigt können sie und der AMBA-APB Bus sowie die Brücke 10 beim Design weggelassen werden, was zu einer Platzeinsparung und zur Reduzierung von Herstellungskosten führt.

Der Prozessor 17 hat einen Verbindung zu einem JTAG= Joint Test Action Group. Das JTAG Interface kann zum Debuggen der Software auf dem internen Prozessor verwendet werden, aber auch waehrend der Fertigungskontrolle des ASICs.

Der AMBA-APB Bus kann intern, außerhalb der Prozessorplattform weitergeführt sein und gegebenenfalls auch extern, außerhalb der integrierten Schaltung.

Der AMBA-AHB Bus kann intern, außerhalb der Prozessorplattform weitergeführt sein und gegebenenfalls auch extern, außerhalb der integrierten Schaltung.

Im Ausführungsbeispiel ist eine spezielle Prozessorplattform dargestellt. Die Erfindung kann auf jede Prozessorplattform angewendet werden, insbesondere eine Prozessorplattform mit weniger oder mehr Elementen als die in der Fig. dargestellte. Die integrierte Schaltung kann auch mehr als einen Prozessor, mehr als einen Steuereingang und mehr als einen externen Speicher aufweisen. Sind beispielsweise zwei Prozessoren über eine gemeinsame Adressverwaltung verwaltet, so können ein Steuereingang und ein externer Speicher für beide Prozessoren ausreichend sein. Außer der speziellen Prozessorplattform können auf der integrierten Schaltung noch weitere Prozessoren und Module angeordnet sein, die auch den Großteil der integrierten Schaltung, z.B. 80%, ausmachen können, so dass z.B. nur 20% auf die Prozessorplattform entfällt. Die integrierte Schaltung kann auch zwei oder mehr Prozessorplattformen beinhalten.

Beim Ausführungsbeispiel sind chipintern AMBA Busse verwendet und chipextern AMBA Busse und/oder ein PCI Bus. Chipintern können z.B. auch verwendet werden: CoreConnect Bus, CoreFrame Bus, FISPbus oder IPbus. Chipextern können z.B. auch verwendet werden: VMEbus, USB Bus, usw. Anstelle eines oder zwei Busse zur chipinternen Verbindung der Bausteine können auch drei oder mehr Busse verwendet werden, z.B. ein Extra-Bus für die Verknüpfung des Arbiters mit mehreren Bausteinen. Die Prozessoren sind beispielsweise als ARM, Intel oder AMD Prozessoren ausgeführt.

Abkürzungen:
AMBA = Advanved Micro-controller Bus Architecture,
AHB = Advanced High-performance Bus,
APB = Advanced Peripheral Bus,
ARM = Advanced RISC Machine,
VHDL = VHSIC Hardware Description Language.

## Patentansprüche

1. Integrierte Schaltung, insbesondere ein System-on-Chip, beinhaltend zum einen eine Prozessorplattform (CleanDMEP) mit einem Prozessor (17) und zum anderen einen Ausgang zum Anschließen eines externen Speichers (MEMO), insbesondere ein Flash, auf dem Boot und/oder Test Software für den Prozessor (17) gespeichert ist.

2. Integrierte Schaltung nach Anspruch 1, **dadurch gekennzeichnet, dass** die integrierte Schaltung einen internen Speicher (18) beinhaltet auf dem Boot und/oder Test Software für den Prozessor (17) gespeichert ist.

3. Integrierte Schaltung nach Anspruch 2, **dadurch gekennzeichnet, dass** die integrierte Schaltung einen externen Steuereingang (S) aufweist, der dafür vorgesehen ist, zwischen externem (MEMO) und internem (18) Speicher umzuschalten.

4. Integrierte Schaltung nach Anspruch 3, **dadurch gekennzeichnet, dass** die integrierte Schaltung eine interne Adressverwaltung (11) beinhaltet und dass der externe Steuereingang (S) dafür vorgesehen ist, die Adressverwaltung (11) derart zu programmieren oder einzustellen, dass unter dem für das Booten und/oder Testen vorgesehenen Adressbereich entweder der externe (MEMO) oder der interne (18) Speicher ausgewählt wird.

5. Integrierte Schaltung nach Anspruch 1, **dadurch gekennzeichnet, dass** der externe Speicher (MEMO) als ROM, PROM, EPROM, EEPROM oder Flash ausgeführt ist.
